(19) Europäisches Patentamt
European Patent Office
Office européen des brevets

(11) **EP 2 841 961 B1**

(12) **EUROPÄISCHE PATENTSCHRIFT**

(45) Veröffentlichungstag und Bekanntmachung des Hinweises auf die Patenterteilung:
**23.11.2016   Patentblatt 2016/47**

(21) Anmeldenummer: **13719711.7**

(22) Anmeldetag: **16.03.2013**

(51) Int Cl.:
*G01S 7/35* (2006.01)          *G01S 13/58* (2006.01)
*G01S 13/34* (2006.01)

(86) Internationale Anmeldenummer:
**PCT/DE2013/000154**

(87) Internationale Veröffentlichungsnummer:
**WO 2013/156012 (24.10.2013 Gazette 2013/43)**

(54) **VERFAHREN UND VORRICHTUNG ZUR BESTIMMUNG VON ABSTAND UND RADIALGESCHWINDIGKEIT EINES OBJEKTS MITTELS RADARSIGNALEN**

METHOD AND DEVICE FOR DETERMINING DISTANCE AND RADIAL VELOCITY OF AN OBJECT BY MEANS OF RADAR SIGNALS

PROCÉDÉ ET DISPOSITIF POUR DÉTERMINER LA DISTANCE ET LA VITESSE RADIALE D'UN OBJET AU MOYEN DE SIGNAUX RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2012   DE 102012008350**

(43) Veröffentlichungstag der Anmeldung:
**04.03.2015   Patentblatt 2015/10**

(73) Patentinhaber: **S.M.S. Smart Microwave Sensors GmbH**
**38108 Braunschweig (DE)**

(72) Erfinder: **ROHLING, Hermann**
**38304 Wolfenbüttel (DE)**

(74) Vertreter: **Lins, Edgar et al**
**Gramm, Lins & Partner**
**Patent- und Rechtsanwälte PartGmbB**
**Theodor-Heuss-Strasse 1**
**38122 Braunschweig (DE)**

(56) Entgegenhaltungen:
EP-A2- 1 918 736          WO-A2-02/31529
WO-A2-03/048802          DE-A1- 4 244 608
DE-A1-102009 000 468

EP 2 841 961 B1

**Beschreibung**

Die Erfindung betrifft ein Verfahren zur Bestimmung von Abstand und Radialgeschwindigkeit eines Objekts bezogen auf einen Messort, bei dem vom Messort aus Radarsignale ausgesandt und nach einer Reflektion am Objekt wieder empfangen werden, wobei die ausgesandten Radarsignale innerhalb eines Messzyklus in zahlreiche Abschnitte unterteilt sind, in denen sie in ihrer Frequenz von einem Ausgangswert bis zu einem Endwert verändert werden und die empfangenen reflektierten Signale über jeweils einen Abschnitt einer ersten Auswertung zur Erkennung von Frequenzpeaks unterworfen werden und zusätzlich eine anschließende zweite Auswertung der Signale für die Frequenzpeaks aller Abschnitte des Messzyklus zur Bestimmung eines Dopplerfrequenzanteils als Maß für die Radialgeschwindigkeit vorgenommen wird.

Die Erfindung betrifft ferner eine Vorrichtung zur Bestimmung von Abstand und Radialgeschwindigkeit eines Objekts bezogen auf einen Messort, mit einem Radarsender, einem am Messort angeordneten Empfänger für vom Objekt reflektierte Radarsignale des Radarsenders, wobei die Radarsignale innerhalb eines Messzyklus in zahlreiche Abschnitte unterteilt sind, in denen sie in ihrer Frequenz von einem Ausgangswert bis zu einem Endwert verändert werden, mit einer an den Empfänger abgeschlossenen ersten Auswertungseinrichtung zur Erkennung von Frequenzpeaks jeweils innerhalb der Abschnitte des empfangenen Signals, und mit einer an die erste Auswertungseinrichtung angeschlossenen zweiten Auswertungseinrichtung zur Auswertung einer Phasendifferenz der ermittelten Frequenzpeaks zur Bestimmung eines Dopplerfrequenzanteils als Maß für die Radialgeschwindigkeit.

Es ist bekannt, mittels geeignet modulierter Radarsignale mit einer Messung sowohl Abstand als auch Radialgeschwindigkeit eines Objekts relativ zu einem Messort zu bestimmen.

Eine geeignete bekannte Modulationsart der Radarsignale ist in EP 1 325 350 B1 beschrieben. Dabei werden während eines Messzyklus von beispielsweise 65 ms Länge ($T_{chirp}$) zwei ineinander verschachtelte Rampen A und B moduliert. Pro Rampe werden 512 Abtastwerte des reflektierten Signals aufgenommen und separat für jede Rampe ausgewertet. Die Auswertung erfolgt durch FFT (Fast Fourier Transformation) mit insgesamt 2x 512 Abtastpunkten. Demgemäß beträgt die Abtastperiode 65 ms/2 x 512 = 63,48 μs. Die Abtastfrequenz liegt somit bei 15,75 kHz, wobei die effektive Abtastfrequenz pro Rampe halb so hoch ist, also bei 7,88 kHz liegt. Der Dopplerfrequenzbereich von 7,88 kHz entspricht einem eindeutigen Geschwindigkeitsmessbereich von 49 m/s bei einer Trägerfrequenz von 24,125 GHz. Der eindeutige Geschwihdigkeitsmessbereich entspricht 176,4 km/h, ist also für die Anwendung im Straßenverkehr im Allgemeinen ausreichend, weil sich der Messort, also Radarsender und Radarempfänger, üblicherweise im Fahrzeug befinden und Radialgeschwindigkeiten zwischen fahrenden Fahrzeugen von > 175 km/h - jedenfalls im Stadtverkehr - praktisch nicht vorkommen. Dieses Verfahren bietet jedoch Nachteile, wenn viele Reflektoren vorhanden sind, die sich alle als Peaks in einem Frequenzspektrum darstellen. Dieses Spektrum kann daher stark belegt sein. Mehrere Reflektoren können sich gegenseitig "maskieren", sodass in ungünstigen Fällen relevante Objekte nicht (ständig) erfasst werden.

Bekannt ist ferner, das Sendesignal mit kurzen, schnellen und identischen Rampen zu modulieren. Während einer Zykluszeit von 65 ms können beispielsweise 256 Rampen moduliert werden, die jeweils eine Länge $T_{chirp}$ von 254 μs aufweisen. Wenn jede Rampe mit 512 Abtastwerten abgetastet wird, entspricht dies einer effektiven Abtastperiode von 65 ms/256 x 512 = 496 ns, also einer Abtastfrequenz von 2,01 MHz.

Mit dieser Abtastfrequenz von 2,01 MHz wird eine erste Auswertung in Form einer ersten FFT ausgeführt. Eine zweite FFT erfolgt von Rampe zu Rampe, also mit einer effektiven Abtastperiode von 65 ms/256 = 254 μs, entsprechend einer Abtastfrequenz von 3,94 kHz.

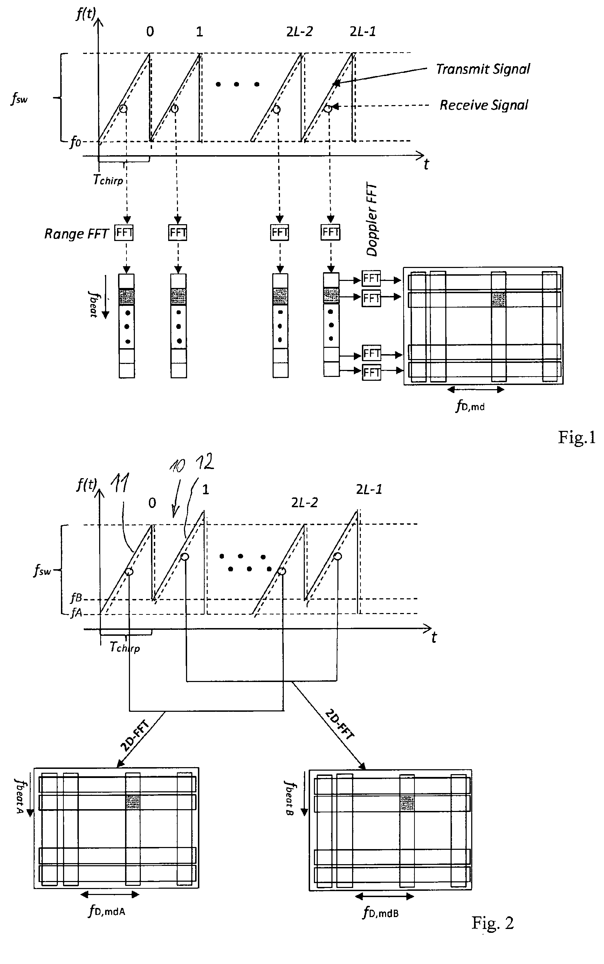

Bei der Abtastfrequenz von 2,01 MHz für die erste FFT entsteht ein Frequenzpeak für die reflektierten Signale pro Rampe, der sich ganz überwiegend aus dem Frequenzanteil aufgrund der Entfernung ergibt. Für übliche Geschwindigkeiten, wie sie im Straßenverkehr vorkommen, ist der Dopplerfrequenzanteil vernachlässigbar gering, sodass bereits bei der ersten FFT für jede Rampe ein Signal für die Entfernung zur Verfügung steht. Diese entsprechenden Signale aller (beispielsweise 256) Rampen einer Abtastperiode können miteinander kombiniert werden, sodass sich ein sehr großes Signal-Rausch-Verhältnis für die Entfernungsbestimmung ergibt. Auf diese Weise gelingt es beispielsweise in stationären Überwachungsradaren, Objekte in der Größe eines Menschen oder eines größeren Tiers in einem Abstand von mehr als 7 km zuverlässig zu detektieren. Während die erste FFT (Range FFT) pro Rampe ausgeführt wird, sodass bei 256 Rampen auch 256 Frequenzspektren der ersten FFT vorliegen, wird die zweite FFT (Doppler FFT) vorzugsweise für jeden Entfernungswert ("Entfernungstor") durchgeführt. Es ist allerdings auch möglich, die zweite FFT nur für ausgewählte Entfernungswerte auszuführen. Beispielsweise können solche Entfernungstore ausgewählt werden, für die eine Reflektion detektiert worden ist. Das Ergebnis der beiden FFT lässt sich in einer Range-Doppler-Matrix (RDM) darstellen, wie dies in Figur 1 gezeigt ist. In einer Situation mit zahlreichen Reflektoren verteilen sich diese somit in der Range-Doppler-Matrix (RDM) in zwei Dimensionen, sodass die Wahrscheinlichkeit einer gegenseitigen Maskierung erheblich herabgesetzt ist. Die Abtastfrequenz von 3,94 kHz für die zweite FFT entspricht einem eindeutigen Geschwindigkeitsmessbereich von 24,5 m/s, entsprechend 88,2 km/h. Dieser Eindeutigkeitsbereich ist für viele Anwendungsfälle nicht ausreichend. In dem in Figur 1 dargestellten Ausführungsbeispiel der im Stand der Technik bekannten Signalmodulierung beträgt der Frequenzhub pro Rampe 100 MHz. Figur 1 lässt erkennen, dass das nach der Reflektion empfangene Signal (Receive Signal) um die Laufzeit des Signals zeitverschoben zu dem ausgesandten Signal (Transmit Signal) ist. Dargestellt sind in Figur 1 2L Rampen (beispielsweise 2 L = 256). Pro Rampe ergibt sich eine Range FFT mit einer Erkennung einer Range Frequenz ($f_{Beat}$). Die für die detektierte Frequenz $f_{Beat}$ gefundenen Signale werden der zweiten Doppler-FFT zugeführt, woraus sich die Range-Doppler-Matrix ergibt.

Die mathematische Beschreibung dieses Verfahren benutzt die Tatsache, dass die gemessene Frequenz $f_{Beat}$ sich aus einem Frequenzanteil $f_R$ durch die Zielentfernung R und einem Anteil $f_D$, verursacht durch den Dopplereffekt, ergibt:

$$f_{Beat} = f_R - f_D = -\frac{f_{SW}}{T_{chirp}}\frac{2}{c}\cdot R + f_0\frac{2}{c}\cdot v_r \qquad (1)$$

Dabei bezeichnet fsw die Bandbreite und $T_{chirp}$ die zeitliche Dauer einer einzigen Frequenzrampe; c ist die Lichtgeschwindigkeit, f0 die untere Trägerfrequenz des Sendesignals und $v_r$ die Radialgeschwindigkeit.

Das Empfangssignal wird mit dem Sendesignal in das Basisband abgemischt.

Dieses abgemischte Empfangssignal ergibt sich zu

$$s(t) = e^{\left(j2\pi\left(t\, f_{Beat}t + f_0\frac{2R}{c}\right)\right)} \qquad (2)$$

Wird eine kohärente Sequenz von insgesamt 2L Rampen Signalen (d.h. ein Messzyklus, entsprechend hier 2L = 256 Rampen) betrachtet, wobei l den laufenden Index der Rampen bezeichnet, dann wird das in der obigen Gleichung beschriebene (zweidimensionale) zeitkontinuierliche Signal wie folgt angegeben. Der Parameter fD,md beschreibt die Dopplerfrequenz, die durchaus mehrdeutig gemessen sein kann.

$$s(t,l) = e^{\left(j2\pi\left(t\, f_{Beat}t - f_{D,md}T_{chirp}l + f_0\frac{2R}{c}\right)\right)} \qquad (3)$$

Das mit der Abtastfrequenz $f_{sa}$ gewonnene (zweidimensionale zeitdiskrete Signal ist dann (k bezeichnet den laufenden Index des zeitdiskreten Signals innerhalb einer Rampe, von Null bis K-1; K entspricht der Anzahl der Abtastwerte in einer Rampe, hier gleich 512):

$$s(k,l) = e^{\left(j2\pi\left(f_{Beat}\frac{k}{f_{sa}} - f_{D,md}T_{chirp}l + f_0\frac{2R}{c}\right)\right)} \qquad (4)$$

Dieses Signal wird mit je einer FFT pro Rampe (Range FFT über K Abtastwerte einer jeden Rampe) transformiert und es ergibt sich ein neues zweidimensionales Signal (m bezeichnet den laufenden Index der Spektrallinie der Range FFT von Null bis K-1):

$$S(m,l) = \sum_{k=0}^{K-1} e^{\left( j2\pi \left( f_{\text{Beat}} \frac{k}{f_{\text{sa}}} - f_{\text{D,md}} T_{chirp} l + f_0 \frac{2R}{c} \right) \right)} \cdot e^{-j2\pi \frac{k \cdot m}{K}}$$

(5)

Je eine zweite FFT (Doppler FFT), die für jedes k mit einer FFT Länge von 2L und für jede n Spektrallinie der Doppler FFT berechnet wird, liefert das folgende Spektrum:

$$S(m,n) = \sum_{l=0}^{2L-1} \sum_{k=0}^{K-1} e^{\left( j2\pi \left( f_{\text{Beat}} \frac{k}{f_{\text{sa}}} - f_{\text{D,md}} T_{chirp} l + f_0 \frac{2R}{c} \right) \right)} \cdot e^{-j2\pi \frac{k \cdot m}{K}} e^{-j2\pi \frac{l \cdot n}{2L}}$$

(6)

Dieses Signal S(m,n) wird in einer Range-Doppler-Matrix (RDM) dargestellt und enthält die o. g. Mehrdeutigkeiten in der Dopplerfrequenzmessung, wofür zunächst keine Lösung für dieses Sendesignal vorliegt. Für die Anwendung dieses Verfahrens in der Praxis muss daher regelmäßig ein größerer Aufwand eingesetzt werden, um die Mehrdeutigkeiten in der Dopplerfrequenzmessung zu beseitigen. Aus diesem Grund hat das als 2D FFT-Verfahren (zweidimensionales FFT-Verfahren) bekannt gewordene Verfahren praktische Nachteile.

DE 10 209 000 468 A1 offenbart ein derartiges 2D FFT-Verfahren, bei dem die Eliminierung von Mehrdeutigkeiten durch eine spezielle Signalform erfolgen soll, die über die Messperiode aus beispielsweise 128 linearen Frequenzrampen besteht, die jeweils um eine Differenzfrequenz Δf gegenüber der vorhergehenden Frequenzrampe verschoben sind, sodass die letzte Frequenzrampe gegenüber der ersten Frequenzrampe um beispielsweise 127 x Δf verschoben ist. Ein deutlicher Teil der für die Aussendung des Signals benötigten Bandbreite steht daher für die Auswertung der Frequenzrampen nicht zur Verfügung.

Der vorliegenden Erfindung liegt die Aufgabe zugrunde einerseits die Prinzipien der schnellen Rampenmodulation des Sendesignals mit der anschließenden zweidimensionalen Auswertung anzuwenden und deren Vorteile zu erzielen, andererseits die Nachteile der Mehrdeutigkeit der Geschwindigkeitsmessung in einfacher Weise zu vermeiden.

Zur Lösung dieser Aufgabe ist erfindungsgemäß das Verfahren der eingangs erwähnten Art dadurch gekennzeichnet, dass die Abschnitte in wenigstens zwei Gruppen unterteilt werden, deren Ausgangswert und/oder Endwert der sich verändernden Frequenz unterschiedlich sind, dass die Abschnitte jeder Gruppe gesondert der zweiten Auswertung unterworfen werden und dass durch die Bestimmung einer Phasendifferenz der bei der zweiten Auswertung der Abschnitte jeder Gruppe entstehenden, einander entsprechenden Signale eine Behebung von Mehrdeutigkeiten der ermittelten Geschwindigkeiten vorgenommen wird.

In entsprechender Weise ist die Vorrichtung der eingangs erwähnten Art erfindungsgemäß dadurch gekennzeichnet, dass für die Auswertung in den Auswertungseinrichtungen Abschnitte wenigstens zweier Gruppen verwendet werden, deren Ausgangswert und/oder Endwert der sich verändernden Frequenz unterschiedlich sind, dass die zweite Auswertungseinrichtung wenigstens zwei Auswertungsstufen für die separate Auswertung der Signale der wenigstens zwei Gruppen aufweist und dass an die wenigstens zwei Auswertungsstufen wenigstens ein Phasendifferenzdetektor angeschlossen ist, dessen Ausgangssignale zur eindeutigen Bestimmung von Radialgeschwindigkeiten verwendbar sind.

Das erfindungsgemäße Verfahren verwendet somit die als Frequenzrampen ausgebildeten Abschnitte eines Radarsignals, wobei wenigstens zwei, vorzugsweise genau zwei, Gruppen der Abschnitte ausgebildet werden, die ineinander verschachtelt werden, sodass sich eine Rampe der einen Gruppe an die entsprechende Rampe der anderen Gruppe anschließt. Die Rampen der beiden oder mehreren Gruppen unterscheiden sich bezüglich ihrer Ausgangswerte und/oder Endwerte der sich verändernden Frequenzen, sodass in der Frequenz-Zeit-Darstellung jeweils in Frequenzrichtung versetzte Rampen verwendet werden, die im Übrigen vorzugsweise gleich ausgestaltet sind, also einen gleichen Frequenzhub und eine gleiche Steigung aufweisen. Die Verschiebung der Frequenzen soll dabei sehr gering sein und beispielsweise weniger als $10^{-3}$, vorzugsweise etwa $10^{-4}$ oder kleiner, des Modulationshubs der Frequenzrampe aufweisen. Überraschenderweise ergeben sich bei dieser Gestaltung der Modulation der Sendesignale gleichzeitige und eindeutige Aussagen für die Entfernungsmessung und die Dopplerfrequenzmessung, wenn die Phasendifferenz für die Frequenzpeaks der Range-Doppler-Matrix ermittelt wird, die anhand eines Ausführungsbeispiels noch näher erläutert werden.

Für die Erstellung der unterschiedlichen Frequenzrampen der beiden (oder mehreren) Gruppen können die Frequenzrampen mit einem entsprechenden Generator für beide Gruppen gleich erzeugt und physikalisch gesendet werden, wobei jedoch für beide Gruppen etwas verschobene Abschnitte der Frequenzrampen für die Auswertung benutzt werden. Bei einem real modulierten Frequenzhub fsw beträgt der genutzte Frequenzhub dann fsw - (f_B-f_A), wobei f_A der Ausgangsfrequenzwert für die erste Gruppe A der Abschnitte und f_B der Ausgangsfrequenzwert für die zweite Gruppe B der Abschnitte ist.

In ähnlicher Weise können Anfangs- bzw. Endabschnitte der empfangenen Signale der beiden Gruppen "abgeschnitten" werden, indem entsprechende Abtastwerte am Beginn bzw. am Ende der Abtastung verworfen werden, also unausgewertet bleiben. Zur Erläuterung der Erfindung dienen grafische Darstellungen von Ausführungsbeispielen. Es zeigen:

Figur 1 ein Kurvenverlauf und schematische Auswertungssignale zur Bildung einer Range-Doppler-Matrix durch zweidimensionale FFT gemäß dem Stand der Technik;

Figur 2 einen erfindungsgemäßen Kurvenverlauf gemäß einem Ausführungsbeispiel der Erfindung mit zwei Auswertungs-Range-DopplerMatrizen;

Figur 3 eine erste Variante zur Ausbildung der erfindungsgemäßen Modulation der Sendesignale;

Figur 4 eine zweite Variante zur Ausbildung der erfindungsgemäß modulierten Signale.

Figur 2 enthält eine grafische Darstellung des Verlaufs eines Sendesignals, wobei die Frequenz des Sendesignals f(t) über die Zeit t aufgetragen ist. Das Sendesignal besteht aus 2 L Abschnitten 10, die zwei Gruppen A, B von Frequenzrampen bilden. Abschnitte 11 der ersten Gruppe A erstrecken sich von einem Ausgangswert f_A über einen Modulationshub fsw, während sich die Abschnitte 12 der zweiten Gruppe B von einem Ausgangswert f_B aus mit demselben Modulationshub (Bandbreite) fsw erstrecken. Die Abschnitte 11, 12 der Gruppen A, B schließen abwechselnd aneinander, sodass alle geradzahligen Abschnitte zur Gruppe A und alle ungeradzahligen Abschnitte zur Gruppe B gehören.

Wie im Stand der Technik wird für jeden Abschnitt 10 jeweils eine Auswertung, vorzugsweise in Form einer FFT, ausgeführt. Mit Hilfe einer zweiten Auswertung, insbesondere einer zweiten FFT, wird eine Range-Doppler-Matrix für die Abschnitte 11 der ersten Gruppe einerseits und für die Abschnitte 12 der zweiten Gruppe B andererseits gebildet. Für die beiden Matrizen entstehen somit unterschiedlich gemessene Beatfrequenzen $f_{\text{Beat}}$ A und $f_{\text{Beat}}$ B.

Das erfindungsgemäße Sendesignal besteht zunächst aus einem klassischen Sendesignal, also aus kurzen schnellen Rampen, mit fest vorgegebener Rampendauer $T_{\text{chirp}}$. Allerdings werden die beiden Rampengruppen A und B in einem ineinander verschachtelten "intertwined" Modus gesendet. Zwischen den ersten Abschnitten (Rampen) 11 und den zweiten Abschnitten (Rampen) 12 ist eine nur sehr gering veränderte untere Trägerfrequenz eingestellt, die beispielsweise um 10 kHz verschieden ist. Damit wird in der ersten Gruppe A im Ausführungsbeispiel das Sendesignal von fo bis fo + 100,000 MHz und in der anderen Rampengruppe B von fo + 10 kHz bis fo + 100,010 MHz moduliert.

Die Echosignale werden mit der momentanen Sendefrequenz ins Basisband abgemischt. Für die beiden Rampengruppen A und B werden die Range-Doppler-Matrizen erstellt. Ein Ziel bzw. Objekt wird dementsprechend in beiden Rampengruppen A und B in exakt derselben Zelle der beiden Range-Doppler-Matrizen (RDM) beobachtet und detektiert.

Da die Doppler-Frequenz-Analyse (zweite FFT) pro Rampengruppe A vorgenommen wird, also jeweils über zwei Rampenabstände hinweg, halbiert sich der im Stand der Technik bereits geringe Eindeutigkeitsbereich der Dopplerfrequenz nochmals.

Aufgrund der erfindungsgemäßen Maßnahme führt dies aber nicht zu Nachteilen. Mit dem erfindungsgemäßen Sendesignal und den beiden unteren Trägerfrequenzen $f_A$ = fo und $f_B$ = $f_0$ + 10 kHz entstehen die beiden Range-Doppler-Matrizen für die beiden ineinander verschachtelten Signale mit folgenden Spektren nach der zweidimensionalen FFT:

$$S_A(m,n) = \sum_{l=0}^{L-1}\sum_{k=0}^{K-1} e^{\left( j2\pi\left( f_{\text{Beat}}\frac{k}{f_{\text{sa}}} - f_{\text{D,md}}T_{chirp}2l + f_A\frac{2R}{c} \right) \right)} \cdot e^{-j2\pi\frac{k\cdot m}{K}} e^{-j2\pi\frac{l\cdot n}{L}}$$

(7)

$$S_B(m,n) = \sum_{l=0}^{L-1} \sum_{k=0}^{K-1} e^{\left(j2\pi\left(f_{\text{Beat}}\frac{k}{f_{\text{sa}}} - f_{\text{D,md}}T_{chirp}(2l+1) + f_{\text{B}}\frac{2R}{c}\right)\right)} \cdot e^{-j2\pi\frac{k\cdot m}{K}} e^{-j2\pi\frac{l\cdot n}{L}}$$

$$(8)$$

Dabei werden insgesamt 2L Rampensignale 11, 12 gesendet. Dem Signal $S_A$ werden alle geradzahligen Rampen (Gruppe A) zugeordnet, während das Signal $S_B$ sich aus den ungeradzahligen Rampen (Gruppe B) (2l+1) zusammensetzt. Gegenüber der bekannten Anordnung sind die Ausgangswerte $f_A$ und $f_B$ der Trägerfrequenzen in den beiden Gruppen A, B leicht zueinander verschoben. Die zu verarbeitenden Abschnitte (Rampen) einer Gruppe A, B sind aufgrund der verschachtelten Anordnung um eine Rampenlänge $T_{chirp}$ voneinander beabstandet.

In dieser Situation entstehen zwei Range-Doppler-Matrizen, die zellenspezifisch ausgewertet werden. Zum Zwecke der Detektion werden die Signale pro Zelle einfach inkohärent betragsmäßig addiert. Für jedes detektierte Ziel kann unmittelbar die Frequenz $f_{\text{Beat}}$ und die mehrdeutige Dopplerfrequenz $f_{\text{D,md}}$ direkt aus der Range-Doppler-Matrix abgelesen oder für eine erhöhte Genauigkeit per Interpolationstechnik berechnet werden. Insoweit existieren zwei Range-Doppler-Matrizen mit identischer Betragsinformation (aber unterschiedlicher Phaseninformation).

Erfindungsgemäß wird nun die Phasendifferenz pro Zelle in der Range-Doppler-Matrix ausgewertet, zweckmäßigerweise nur für diejenigen Zellen, in denen ein Ziel detektiert wurde.

Mathematisch ergibt sich

$$\Delta\Phi = \left[\left(\arg\left(\frac{S_A(m,n)}{S_B(m,n)}\right) - 2\pi \cdot f_{\text{D,md}}T_{chirp}\right) \bmod \pi\right]$$

$$(9)$$

$$= 2\pi\left((f_A - f_B)\frac{2R}{c}\right)$$

$f_{\text{D,md}} T_{\text{chirp}}$ ist ein Phasenkorrekturfaktor, der durch die (möglicherweise mehrdeutig) gemessene Dopplerfrequenz $f_{\text{D,md}}$ von Rampe zu Rampe entsteht. Um diesen Wert dreht sich die Phase von Rampe zu Rampe weiter. Dies muss für die Auswertung der empfangenen verschachtelten Signalanordnung berücksichtigt werden. Aus der obigen Gleichung und der Phasendifferenzmessung kann nun die Zielentfernung R und damit $f_R$ wie folgt berechnet werden:

$$R = \frac{\Delta\Phi}{2\pi} \cdot \frac{c}{2} \frac{1}{(f_A - f_B)}$$

$$(10)$$

$$f_{\text{R}} = -\frac{T_R}{T_{chirp}} \cdot f_{\text{sw}} = -\frac{2R}{c} \cdot \frac{f_{\text{sw}}}{T_{chirp}} = -\frac{\Delta\Phi}{2\pi} \cdot \frac{1}{(f_A - f_B)} \frac{f_{\text{sw}}}{T_{chirp}}$$

$$(11)$$

Schließlich ergibt sich aus der obigen Gleichung unter Berücksichtigung der gemessenen Beatfrequenz $f_{\text{Beat}}$ und der gemessenen Differenzphase die eindeutige Dopplerfrequenz $f_{\text{D}}$:

$$f_D = f_R - f_{Beat} \tag{12}$$

$$= -\frac{\Delta\Phi}{2\pi} \cdot \frac{1}{(f_A - f_B)} \frac{f_{sw}}{f_{chirp}} - f_{Beat} \tag{13}$$

Die Auswertung der gemessenen Phasendifferenz führt zu einer maximal eindeutig messbaren Entfernung von

$$R_{max} = \frac{1}{2} \cdot \frac{c}{2} \frac{1}{(f_A - f_B)} \tag{14}$$

Für eine Frequenzdifferenz ($f_A$ - $f_B$) von 10 kHz entsteht eine maximal eindeutig messbare Entfernung von $R_{max}$ = 7,5 km. Bei einer Frequenzdifferenz ($f_A$ - $f_B$) von 4 kHz entsteht eine maximal eindeutig messbare Entfernung von Rmax = 18,75 km.

Gleichung 11 führt somit zu einer nicht nur ungefähren, sondern genauen Bestimmung der zum Abstand R gehörenden Frequenz, die gemäß Gleichung 12 und 13 eine genaue Bestimmung der Dopplerfrequenz $f_D$ in eindeutiger Weise ermöglicht.

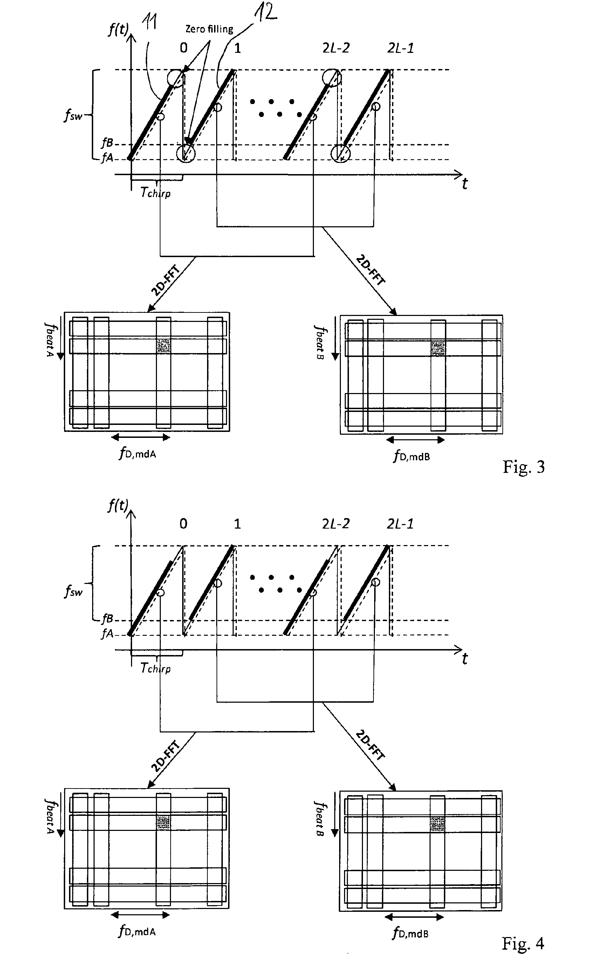

Die erfindungsgemäße Verwendung zweier Gruppen A, B von Abschnitten 11, 12 mit zueinander versetzten Frequenzhüben erlaubt somit eine eindeutige und exakte Bestimmung des Abstands und der Radialgeschwindigkeit über die Bestimmung der Dopplerfrequenz. Das beschriebene Sendesignal kann durch einen entsprechend gesteuerten Frequenzgenerator in der benötigten Weise generiert werden. Es ist aber auch möglich, die Abschnitte 10, 11 real in gleicher Weise zu generieren, jedoch eine virtuell unterschiedliche Modulierung zu verwenden. Hierzu wird gemäß Figur 3 das sogenannte "Zero Filling" benutzt. Der real modulierte Frequenzhub beträgt dabei fsw, wird jedoch nicht vollständig ausgenutzt. Der jeweils genutzte Frequenzhub für die Abschnitte 11, 12 ist fsw - ($f_B$ - $f_A$).

Figur 3 verdeutlicht, dass für die Abschnitte 10 immer eine reale Modulation verwendet wird, die von dem Ausgangswert $f_A$ ausgeht und sich über die gesamte Bandbreite fsw erstreckt. Für die Abschnitte 11 der ersten Gruppe A wird der Abschnitt 11 beginnend mit $f_A$ benutzt, während am oberen Ende ein Abschnitt in der Breite $f_B$ - $f_A$ nicht verwendet wird.

Für den Abschnitt 12 der Gruppe B wird hingegen der untere Abschnitt $f_B$ - $f_A$ nicht verwendet, sodass sich für beide Abschnitte 11, 12 der gleiche Frequenzhub fsw - ($f_B$ - $f_A$) ergibt.

Gemäß der in Figur 4 dargestellten Variation werden die Abschnitte 10 für beide Gruppen A, B real gleich generiert. Die Länge der Abschnitte beträgt dabei fsw + ($f_B$ - $f_A$). Der real modulierte Bereich wird somit um $f_B$ - $f_A$ vergrößert. Ungenutzte Abtastwerte am oberen Ende der Abschnitte 11 der Gruppe A und am unteren Ende des Abschnitts 12 der Gruppe B werden verworfen.

In allen beschriebenen Fällen weisen die Abschnitte 10, 11 einen gleichen Frequenzhub und eine gleiche Steigung auf. Dies ist nicht zwingend erforderlich. Unterschiedliche Frequenzhübe und unterschiedliche Steigungen können in dem hier beschriebenen Verfahren ebenfalls verwendet werden. Allerdings ist dafür die mathematische Auswertung etwas komplizierter.

**Patentansprüche**

1. Verfahren zur Bestimmung von Abstand (R) und Radialgeschwindigkeit (v) eines Objekts bezogen auf einen Messort, bei dem Radarsignale ausgesandt und nach einer Reflektion am Objekt am Messort wieder empfangen werden, wobei die ausgesandten Radarsignale innerhalb eines Messzyklus in zahlreiche Abschnitte (10) unterteilt sind, in denen sie in ihrer Frequenz von einem jeweiligen Ausgangswert ($f_A$, $f_B$) bis zu einem jeweiligen Endwert verändert werden und die empfangenen reflektierten Signale über jeweils einen Abschnitt (10) einer ersten Auswertung zur Erkennung von Frequenzpeaks unterworfen werden und zusätzlich eine anschließende zweite Auswertung der Signale für die Frequenzpeaks aller Abschnitte (10) des Messzyklus zur Bestimmung eines Dopplerfrequenzanteils als Maß für die Radialgeschwindigkeit (v) vorgenommen wird, **dadurch gekennzeichnet, dass** die Abschnitte (10) in wenigstens zwei Gruppen (A, B) unterteilt werden, deren Ausgangswert ($f_A$, $f_B$) und/oder Endwert der sich verändernden Frequenz unterschiedlich sind, dass die Abschnitte (11,12) jeder Gruppe (A, B) gesondert der zweiten Auswertung unterworfen werden und dass durch die Bestimmung einer Phasendifferenz zwischen den bei der zweiten Auswertung der Abschnitte (11, 12) jeder Gruppe (A, B) entstehenden, einander entsprechenden Signale eine Behebung von Mehrdeutigkeiten der ermittelten Geschwindigkeit vorgenommen wird.

2. Verfahren nach Anspruch 1, **dadurch gekennzeichnet, dass** die erste Auswertung als eine erste FFT über die Abtastsignale innerhalb eines Abschnitts (10) zur Bestimmung der Frequenzpeaks vorgenommen wird.

3. Verfahren nach Anspruch 2, **dadurch gekennzeichnet, dass** die zweite Auswertung als eine zweite FFT über die einander entsprechenden Frequenzpeaks der Abschnitte (10) des Messzyklus vorgenommen wird.

4. Verfahren nach Anspruch 3, **dadurch gekennzeichnet, dass** die Bestimmung der Phasendifferenz für die bei der zweiten FFT entstandenen Frequenzpeaks für die Dopplerfrequenz hinter wenigstens zwei Gruppen (A, B) erfolgt.

5. Verfahren nach einem der Ansprüche 1 bis 4, **dadurch gekennzeichnet, dass** die Abschnitte (11, 12) der beiden Gruppen (A, B) mit gleichen realen Frequenzverläufen generiert werden, jedoch für eine erste Gruppe (A) von einem ersten Ausgangswert ($f_A$) bis zu einem ersten Endwert und für die zweite Gruppe (B) von einem zweiten Ausgangswert ($f_B$) bis zu einem zweiten Endwert für die Messung verwendet werden, wobei die Ausgangswerte $f_A$, $f_B$ und Endwerte voneinander verschieden sind.

6. Verfahren nach einem der Ansprüche 1 bis 5, **dadurch gekennzeichnet, dass** die Abschnitte (11, 12) der wenigstens zwei Gruppen (A, B) alle einen gleichen Frequenzhub aufweisen.

7. Verfahren nach einem der Ansprüche 1 bis 6, **dadurch gekennzeichnet, dass** die Frequenzänderung der Abschnitte (10, 11) in den Gruppen (A, B) konstant und gleich groß ist.

8. Verfahren nach einem der Ansprüche 1 bis 7, **dadurch gekennzeichnet, dass** die ermittelte Phasendifferenz auch zur genauen Bestimmung des Abstands (R) eines Objekts ausgewertet wird.

9. Vorrichtung zur Bestimmung von Abstand und Radialgeschwindigkeit eines Objekts bezogen auf einen Messort, mit einem Radarsender, einen am Messort angeordneten Empfänger für vom Objekt reflektierte Radarsignale des Radarsenders, wobei die Radarsignale innerhalb eines Messzyklus in zahlreiche Abschnitte (10) unterteilt sind, in denen sie in ihrer Frequenz von einem jeweiligen Ausgangswert ($f_A$, $f_B$) bis zu einem jeweiligen Endwert verändert werden, mit einer an den Empfänger angeschlossenen ersten Auswertungseinrichtung zur Erkennung von Frequenzpeaks jeweils innerhalb der Abschnitte (10) des empfangenen Signals, mit einer an die erste Auswertungseinrichtung angeschlossenen zweiten Auswertungseinrichtung zur Auswertung einer Phasendifferenz der ermittelten Frequenzpeaks zur Bestimmung eins Dopplerfrequenzanteils als Maß für die Radialgeschwindigkeit (v), **dadurch gekennzeichnet, dass** für die Auswertung in den Auswertungseinrichtungen Abschnitte (11, 12) wenigstens zweier Gruppen (A, B) verwendet werden, deren Ausgangswert ($f_A$, $f_B$) und/oder Endwert der sich verändernden Frequenz unterschiedlich sind, dass die zweite Auswertungseinrichtung wenigstens zwei Auswertungsstufen für die separate Auswertung der Signale der wenigstens zwei Gruppen (A, B) aufweist und dass an die wenigstens zwei Auswertungsstufen wenigstens ein Phasendifferenzdetektor angeschlossen ist, dessen Ausgangssignale zur eindeutigen Bestimmung von Radialgeschwindigkeiten verwendet werden.

10. Vorrichtung nach Anspruch 9, **dadurch gekennzeichnet, dass** das Ausgangssignal des Phasendifferenzdetektors auch zur Bestimmung des Abstands (R) ausgewertet wird.

**Claims**

1. A method for determining the distance (R) and radial velocity (v) of an object in relation to a measurement location, with which radar signals are transmitted and following reflection at the object are received again at the measurement location, wherein the transmitted radar signals are subdivided within a measurement cycle into numerous segments (10), in which they are varied in their frequency from a respective initial value ($f_A$, $f_B$) to a respective final value and the received reflected signals are subjected over a segment (10) in each case to a first evaluation for detecting frequency peaks and additionally a subsequent second evaluation of the signals is carried out for the frequency peaks of all segments (10) of the measurement cycle to determine a Doppler frequency component as a measure of the radial velocity (v), **characterized in that** the segments (10) are subdivided into at least two groups (A, B) whose initial value ($f_A$, $f_B$) and/or final value of the varying frequency are different, that the segments (11, 12) of each group (A, B) are separately subjected to the second evaluation and that elimination of ambiguities of the determined velocity is carried out by determining a phase difference between the mutually corresponding signals arising during the second evaluation of the segments (11, 12) of each group (A, B).

2.  The method as claimed in claim 1, **characterized in that** the first evaluation is carried out as a first FFT using the sampling signals within a segment (10) for determining the frequency peaks.

3.  The method as claimed in claim 2, **characterized in that** the second evaluation is carried out as a second FFT using the mutually corresponding frequency peaks of the segments (10) of the measurement cycle.

4.  The method as claimed in claim 3, **characterized in that** determining the phase difference for the frequency peaks arising during the second FFT for the Doppler frequency takes place after at least two groups (A, B).

5.  The method as claimed in any one of claims 1 to 4, **characterized in that** the segments (11, 12) of the two groups (A, B) are generated with the same real frequency profiles, but are used for a first group (A) from a first initial value ($f_A$) to a first final value and for the second group (B) from a second initial value ($f_B$) to a second final value for the measurement, wherein the initial values $f_A$, $f_B$ and final values are different from each other.

6.  The method as claimed in any one of claims 1 to 5, **characterized in that** the segments (11, 12) of the at least two groups (A, B) all have the same frequency shift.

7.  The method as claimed in any one of claims 1 to 6, **characterized in that** the frequency change of the segments (10, 11) in the groups (A, B) is constant and of the same size.

8.  The method as claimed in any one of claims 1 to 7, **characterized in that** the determined phase difference is also evaluated for accurate determination of the distance (R) of an object.

9.  A device for determining the distance and radial velocity of an object in relation to a measurement location, with a radar transmitter, a receiver disposed at the measurement location for radar signals of the radar transmitter reflected from the object, wherein the radar signals are subdivided within a measurement cycle into numerous segments (10), in which they are varied in their frequency from a respective initial value ($f_A$, $f_B$) to a respective final value, with a first evaluation device connected to the receiver for detecting frequency peaks within each of the segments (10) of the received signal, with a second evaluation device connected to the first evaluation device for evaluation of a phase difference of the determined frequency peaks for determining a Doppler frequency component as a measure of the radial velocity (v), **characterized in that** segments (11, 12) of at least two groups (A, B) are used for the evaluation in the evaluation devices, the initial value ($f_A$, $f_B$) and/or final value of the varying frequency of said segments being different, that the second evaluation device comprises at least two evaluation stages for the separate evaluation of the signals of the at least two groups (A, B) and that at least one phase difference detector, whose output signals are used for unique determination of radial velocities, is connected to the at least two evaluation stages.

10. The device as claimed in claim 9, **characterized in that** the output signal of the phase difference detector is also evaluated for determination of the distance (R).

**Revendications**

1.  Procédé pour déterminer la distance (R) et la vitesse radiale (v) d'un objet par rapport à un lieu de mesure, dans lequel des signaux de radar sont émis et, après réflexion sur l'objet à le lieu de mesure, ils sont reçus à nouveau, les signaux de radar émis étant subdivisés en nombreuses parties au sein d'un cycle de mesure, dans lesquelles ils sont modifiés vis-à-vis de leur fréquence pour passer d'une valeur respective initiale ($f_A$, $f_B$) à une valeur respective finale, et les signaux réfléchis reçus sont soumis pendant une partie respective (10) à une première évaluation pour reconnaître des pics de fréquence, et en supplément on effectue ensuite une seconde évaluation des signaux pour les pics de fréquence de toutes les parties (10) du cycle de mesure en vue de déterminer une part de fréquence de Doppler à titre de valeur pour la vitesse radiale (v), **caractérisé en ce que** les parties (10) sont subdivisées en au moins deux groupes (A, B) dont la valeur initiale ($f_A$, $f_B$) et/ou la valeur finale de la fréquence modifiée sont différentes, **en ce que** les parties (11, 12) de chaque groupe (A, B) sont soumises séparément à la seconde évaluation, et **en ce que** par la détermination d'une différence de phases entre les signaux mutuellement correspondants, résultant de la seconde évaluation des parties (11, 12) de chaque groupe (A, B), on élimine des ambigüités de la vitesse détectée.

2. Procédé selon la revendication 1, **caractérisé en ce que** la première évaluation est réalisée en tant que première FFT sur les signaux de balayage au sein d'une partie (10) pour déterminer les pics de fréquence.

3. Procédé selon la revendication 2, **caractérisé en ce que** la seconde évaluation est réalisée en tant que seconde FFT sur les pics de fréquence mutuellement correspondants des parties (10) du cycle de mesure.

4. Procédé selon la revendication 3, **caractérisé en ce que** la détermination de la différence de phases pour les pics de fréquence résultant de la seconde FFT pour la fréquence de Doppler s'effectue derrière au moins deux groupes (A, B).

5. Procédé selon l'une des revendications 1 à 4, **caractérisé en ce que** les parties (11, 12) des deux groupes (A, B) sont générées avec des courbes de fréquence réelles égales, mais elles sont utilisées pour la mesure pour un premier groupe (A) depuis une première valeur initiale ($f_A$) jusqu'à une première valeur finale, et pour le second groupe (B) depuis une seconde valeur initiale ($f_B$) jusqu'à une seconde valeur finale, les valeurs initiales $f_A$, $f_B$ et les valeurs finales étant différentes les unes des autres.

6. Procédé selon l'une des revendications 1 à 5, **caractérisé en ce que** les parties (11, 12) desdits au moins deux groupes (A, B) présentent toutes le même écart de fréquence.

7. Procédé selon l'une des revendications 1 à 6, **caractérisé en ce que** la modification de la fréquence des parties (10, 11) dans les groupes (A, B) est constante et de même taille.

8. Procédé selon l'une des revendications 1 à 7, **caractérisé en ce que** la différence de phases détectée est évaluée également pour la détermination précise de la distance (R) d'un objet.

9. Dispositif pour déterminer la distance et la vitesse radiale d'un objet par rapport à un lieu de mesure, comportant un émetteur radar, un récepteur agencé à le lieu de mesure pour des signaux de radar de l'émetteur de radar réfléchis par l'objet, dans lequel des signaux de radar sont subdivisés en nombreuses parties (10) au sein d'un cycle de mesure, dans lesquelles ils sont modifiés vis-à-vis de leur fréquence pour passer d'une valeur respective initiale ($f_A$, $f_B$) à une valeur respective finale, comportant un premier moyen d'évaluation connecté à l'émetteur pour reconnaître des pics de fréquence au sein des parties respectives (10) du signal reçu, un second moyen d'évaluation connecté au premier moyen d'évaluation pour évaluer une différence de phases des pics de fréquence détectés en vue de déterminer une part de fréquence de Doppler à titre de valeur pour la vitesse radiale (v), **caractérisé en ce que** pour l'évaluation dans les moyens d'évaluation, des parties (11, 12) d'au moins deux groupes (A, B) sont utilisées dont la valeur initiale ($f_A$, $f_B$) et/ou la valeur finale de la fréquence modifiée sont différentes, **en ce que** le second moyen d'évaluation comprend au moins deux étages d'évaluation pour l'évaluation séparée des signaux desdits au moins deux groupes (A, B), **en ce qu'**au moins un détecteur de différence de phases est connecté auxdits au moins deux étages d'évaluation, dont les signaux de sortie sont utilisés pour la détermination univoque des vitesses radiales.

10. Dispositif selon la revendication 9, **caractérisé en ce que** le signal de sortie du détecteur de différence de phases est évalué également pour déterminer la distance (R).

Fig.1

Fig. 2

Fig. 3

Fig. 4

**EP 2 841 961 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1325350 B1
- DE 10209000468 A1